# FASCICULE DE BREVET EUROPEEN

(11) **EP 0 433 137 B1**
(45) Date de publication et mention de la délivrance du brevet: **22.06.1994**
(21) Numéro de dépôt: 90403461.8
(22) Date de dépôt: 06.12.1990
(51) Int. Cl.: B41M 1/34, B60J 1/00

(54) **Procédé pour l'identification durable de feuilles de verre, application du procédé et vitrage d'automobile pourvu d'une identification**
Verfahren zum dauerhaften Kennzeichnen von Glasscheiben, Verwendung dieses Verfahrens und Kraftfahrzeugfenster mit einem Kennzeichen
Method for the durable identification of glass sheets, use of the process and vehicle windows with such an identification

(30) Priorité: 09.12.1989 DE 3940749
(43) Date de publication de la demande: 19.06.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Bartetzko, Joachim M., W-5190 Stolberg (DE)
(74) Mandataire: de Toytot, Robert

(56) Documents cités:
- DE-A- 3 325 664
- DE-C- 16 491
- FR-A- 2 548 962
- US-A- 4 503 437
- CHEMICAL ABSTRACTS, vol. 94, no. 11, 16 Mars 1981, Columbus, Ohio, US; abstract no. 85839U, SUMITOMO CHEMICAL COMPANY LIMITED: 'TRANSFER-PRINTED COATINGS' page 99 ;colonne 2 ;

## Description

La présente invention concerne un procédé pour apposer sur des pièces soumises à un traitement thermique au cours de leur fabrication, avant l'exécution de ce traitement thermique, une identification ou une inscription durable ceci en particulier sur des feuilles de verre avant de les porter par exemple à la température de bombage ou de trempe. L'invention concerne, en outre, l'application du procédé conforme à l'invention, ainsi qu'un vitrage d'automobile identifié par ce procédé.

Il peut pour diverses raisons être avantageux d'identifier des pièces avant leur passage à divers postes de fabrication. Ainsi, en vue d'un suivi qualifié de produits pendant leur processus de fabrication, souhaitable en vue de garantir la qualité, il peut, par exemple, être souhaitable d'apposer des données d'identification et/ou d'information sur des pièces pour identifier le produit dès la première étape de la fabrication et, dans le cas de défauts de production éventuels, reconnaître rapidement et sans équivoque la cause de ces défauts.

L'identification de pièces présente des difficultés lorsque ces pièces sont soumises, au cours de leur fabrication, à un traitement thermique à une température élevée pouvant atteindre environ 500 à 600 °C. Il en est ainsi, par exemple, de feuilles de verre qui sont transformées en vitrages d'automobiles bombés et/ou trempés ou aussi de pièces métalliques qui sont chauffées à une température élevée au cours de leur processus de fabrication. Dans ces cas, les méthodes d'identification habituelles à l'aide de colorants organiques ou d'encres échouent, parce que ces colorants ou encres brûlent aux températures du traitement thermique, de sorte que l'identification cesse ensuite d'être visible.

Dans de tels cas, il est possible d'obtenir une identification durable par impression à l'aide d'un émail à cuire, à base inorganique, qui fond et cuit aux températures du traitement thermique. Les émaux à cuire habituels à cette fin ne peuvent cependant être appliqués que par certains procédés d'impression, en particulier par sérigraphie. Or le procédé sérigraphique ne convient pas lorsqu'il faut apposer une identification qui varie constamment, comme c'est le cas, par exemple, de l'identification individuelle en vue du suivi des produits. Il faut alors utiliser un écran différent pour chaque pièce, de sorte que l'identification par une inscription tracée à l'aide d'un émail en pâte appliqué par sérigraphie est exclue pour des raisons économiques.

Il est par ailleurs connu de la demande de brevet FR-A-2 548 962 de réaliser un décor sur des objets de verre tels des flacons. Le procédé pour obtenir un tel décor consiste à déposer sur le flacon une sous-couche ayant exactement les contours du décor final et qui est notamment en émail, puis une couche finale, notamment en résinate de métal précieux dont l'adhérence au flacon est inférieure à celle de la sous-couche. Sont ensuite éliminés par décapage les éventuels débordements de la couche finale par rapport aux contours de la sous-couche d'émail.

La présente invention a pour but de procurer un procédé pour apposer une identification ou une inscription sur des pièces qui sont soumises à un traitement thermique à température élevée au cours de leur fabrication, qui permette une identification variable et durable et qui soit simple et peu onéreux à mettre en oeuvre. En particulier, le procédé doit convenir pour l'identification individuelle de feuilles de verre qui sont soumises à un processus de bombage et/ou de trempe.

Conformément à l'invention, on atteint ce but en appliquant, sur la surface de la pièce, une couche continue d'un émail à cuire inorganique et, soit avant son application sur la surface de la pièce, soit après son application et son séchage, en apposant le marquage ou l'inscription d'identification à l'emplacement de cette couche d'émail à l'aide d'un colorant organique, puis en cuisant l'émail inorganique au cours du traitement thermique de la pièce.

La couche d'émail à cuire inorganique, qui forme après cuisson un revêtement du type vitrifié ou émaillé, est appliquée sous forme d'une couche continue qui, en tant que telle, ne contient ni marque ni inscription au moment de son application. Cette application sous forme d'un champ uniforme est donc simple et peut être effectuée par les méthodes connues et habituelles, par exemple par sérigraphie. L'identification proprement dite, au contraire, est exécutée à l'aide d'un colorant organique apposé dans chaque cas sous une forme spécifique souhaitée de signes, de chiffres ou de caractères, ceci à un endroit de la pièce également couvert par le champ uniforme d'émail inorganique. Elle est obtenue par inscription ou impression de la surface de la pièce sous la couche d'émail à cuire inorganique, ou par inscription ou impression sur cette couche d'émail mais ceci après son séchage et avant sa cuisson.

Lorsque l'inscription ou l'impression est effectuée avant l'application de la couche d'émail à cuire inorganique, la fusion de cette dernière y fait apparaître des perturbations et des lacunes qui subsistent même après la cuisson et le refroidissement de la pièce. On suppose que cet effet résulte de ce que, lors du traitement thermique provoquant la fusion de la couche d'émail, le colorant organique sous-jacent brûle ou s'évapore et que les produits de combustion ou d'évaporation s'échappent à travers la couche d'émail à cuire fondue en perçant cette couche, ce qui y crée les perturbations et les lacunes précitées. Ces perturbations et lacunes persistent dans la structure de la couche vitrifiée ou émaillée cuite et elles y rendent l'inscription apposée à l'aide du colorant organique bien visible à l'oeil, sous forme de petites lacunes et interruptions dans la couche cuite.

Dans le cas où l'apposition de l'inscription ou du marquage constitué du colorant organique et de la couche constituée d'émail à cuire inorganique est exécutée dans l'ordre inverse, c'est-à-dire lorsque l'inscription ou le marquage est appliqué sur la couche d'émail à cuire inorganique séché, on obtient de manière semblable lors de la cuisson une modification durable bien visible de la surface de la couche de couleur inorganique. Dans ce cas, on n'obtient certes pas de petites lacunes dans la couche d'émail, mais sa surface subit, lors de la cuisson, aux endroits où le colorant organique adhère, des modifications superficielles locales qui sont nettement reconnaissables, en particulier en lumière rasante. Ces modifications forment aussi des marques durables et invariables, parce qu'elles sont présentes dans la surface de la couche d'émail cuite.

Il est impossible de modifier ensuite l'identification sans détruire la couche d'émail, de sorte que le but de l'invention est ainsi atteint.

Etant donné qu'on peut en principe utiliser n'importe quel colorant organique et n'importe quel procédé d'impression pour apposer ce colorant, il est possible d'utiliser des procédés d'impression peu onéreux et variables faciles à automatiser. Des imprimantes à jet d'encre courantes qui peuvent être commandées ou actionnées de manière entièrement automatique se sont révélées particulièrement utiles à cette fin, de sorte que les pièces peuvent sans difficultés être pourvues, par exemple individuellement, de numéros croissants ou d'autres identifications à variation continue.

L'émail à cuire inorganique formant la couche vitrifiée ou émaillée peut aussi être appliqué par n'importe quel procédé d'impression approprié. Un procédé particulièrement approprié à cet effet est la sérigraphie qui, dans ce cas, peut être employée économiquement parce qu'on peut, indépendamment de l'identification en question, appliquer un motif d'impression constant, dont la forme et les dimensions doivent simplement être telles que le champ occupé par l'émail à cuire couvre l'ensemble du domaine occupé par l'inscription ou l'identification.

Dans le cas des vitrages d'automobiles, il est actuellement courant d'appliquer sur le bord du vitrage une impression en forme de cadre constituée d'un émail à cuire opaque. Ce revêtement périphérique est généralement prévu sur des vitrages d'automobiles qui sont fixés à l'aide d'un adhésif au rebord de fixation de la baie pratiquée sur la carrosserie, d'une part dans un but décoratif pour dissimuler ou masquer de l'extérieur le cordon d'adhésif, et d'autre part pour protéger l'adhésif contre les rayons ultraviolets. Pour ce revêtement périphérique, on utilise généralement des émaux à cuire de type vitrifié ou émaillé qui sont cuits à une température d'environ 550 à 600 °C. Pour marquer des vitrages portant un tel revêtement, l'identification à l'aide du colorant organique est exécutée à un endroit situé dans ce revêtement. Une impression supplémentaire du champ d'identification devient ainsi inutile et seule l'identification ou l'inscription à l'aide du colorant organique est alors nécessaire.

L'invention sera davantage expliquée ci-après, avec référence aux dessins annexés, dans lesquels :
La Fig. 1 est une vue fragmentaire d'une vitre portant une inscription appliquée conformément à l'invention, et
La Fig. 2 est une vue fragmentaire d'un vitrage d'automobile portant sur le bord un revêtement en forme de cadre et une identification disposée à l'intérieur du revêtement périphérique.

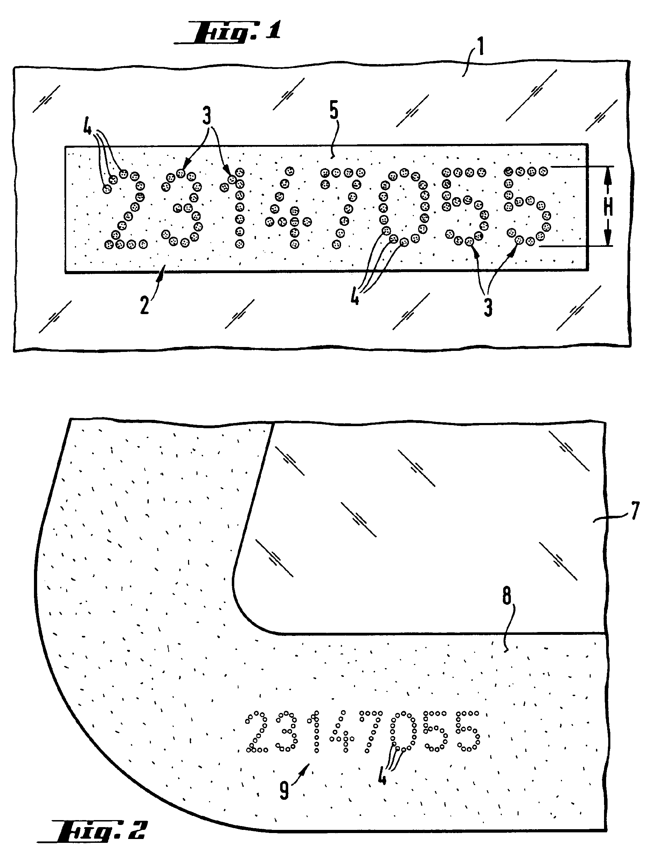

La Fig. 1 représente un vitrage en verre flotté 1, pourvu à un certain endroit d'une identification 2 formée, dans le cas représenté, d'une série de chiffres 3. Chaque chiffre est constitué de points individuels 4. Les points individuels 4 sont formés soit de lacunes complètes dans une couche opaque 5 formée d'un émail cuit, soit d'altérations physiques ou chimiques superficielles mineures dans la surface de l'émail cuit. Les chiffres 3 ont une hauteur H s'élevant, par exemple, à 4 mm. Les points individuels 4 ont un diamètre d'environ 0,1 à 0,5 mm et présentent un espacement réciproque entre centres d'environ 0,2 à 0,8 mm.

Pour exécuter l'identification, on utilise une imprimante à jet d'encre de type classique. Dans une première forme de réalisation de l'invention, à l'aide de cette imprimante à jet d'encre, on applique un fluide colorant organique, sous forme d'un réseau de points, directement sur la surface du verre. On emploie pour liquide colorant l'encre noire habituelle pour imprimante à jet d'encre. L'imprimante à jet d'encre est commandée par une unité de commande qui appose automatiquement sur chaque vitre à identifier l'identification individualisant cette vitre.

Lorsque les gouttelettes d'encre apposées par l'imprimante sur la surface du verre sont sèches, ce qui se produit d'habitude assez rapidement, l'épaisseur de couche des points colorés formant les chiffres 3 est d'environ 1 à 4 »m. Par-dessus les chiffres 3 formés par les points colorés, une couche cohérente 5 est alors imprimée par sérigraphie à l'aide d'une pâte à imprimer d'un émail à cuire puis soumise à un processus de séchage spécifiquement approprié à la pâte considérée et qui peut comprendre, selon la composition du colorant sérigraphique, une exposition à un rayonnement infrarouge ou à un rayonnement ultraviolet. Après le séchage du colorant sérigraphique, la vitre est chauffée à la température de cuisson de ce colorant, par exemple à environ 600 °C. Au cours de ce processus de chauffage, le colorant organique situé sous la couche brûle ou s'évapore.

Les produits de combustion ou les gaz engendrés lors de l'évaporation traversent la couche en cours de fusion 5 et y forment des trous durables qui présentent la forme et la disposition des points constitués par le colorant organique. L'identification ainsi obtenue est nettement lisible des deux côtés de la vitre, tant en transmission qu'en réflexion.

Suivant la seconde forme de réalisation de l'invention, on imprime d'abord, par sérigraphie, une couche cohérente 5 sur la surface du vitrage 1, à l'aide d'un émail à cuire sous forme de pâte à imprimer. Lorsque la couche imprimée 5 a séché ou a été durcie par exposition à un rayonnement ultraviolet, on y imprime, à l'aide d'une imprimante à jet d'encre habituelle, l'identification constituée des caractères 3. On utilise à nouveau pour fluide colorant organique l'encre habituelle pour imprimante à jet d'encre, dont le séchage est relativement rapide. Ensuite, on effectue le processus de cuisson de la couche 5 à une température d'environ 600 °C. Après la cuisson, les points individuels 4 sont constitués d'altérations physiques ou chimiques mineures dans la surface de la couche 5. L'identification ne peut, dans ce cas, être observée que du côté de la vitre 1 sur lequel la couche 5 est appliquée. A partir de l'autre côté, c'est-à-dire à travers le vitrage 1, on n'observe aucune irrégularité ni altération de la couche 5.

Dans le vitrage d'automobile représenté en vue fragmentaire sur la Fig. 2, le volume 7 est pourvu d'un revêtement 8 en forme de cadre périphérique constitué d'un émail à cuire inorganique opaque. A l'intérieur de cette couche 8 est appliquée, à un endroit approprié, une identification 9 constituée de symboles, de caractères ou de chiffres choisis. Les symboles, caractères ou chiffres constituant l'identification 9 sont formés par de petites altérations ponctuelles de la couche 8.

On imprime d'abord sur le volume 7 plan, à la température ambiante, à l'aide du procédé de sérigraphie, le revêtement 8 en forme de cadre, sous la forme d'une pâte à imprimer constituée d'un émail à cuire inorganique opaque. On soumet ensuite la vitre à un processus de séchage impliquant une exposition à un rayonnement infrarouge ou, selon la composition de la pâte à imprimer, une exposition à un rayonnement ultraviolet. Puis, on imprime l'identification sur le revêtement en forme de cadre 8, à nouveau à l'aide d'une imprimante à jet d'encre à commande automatique. Lorsque le colorant organique est sec, le volume est chauffé de la manière habituelle à sa température de bombage d'environ 600 °C et est amené à la forme souhaitée. Au cours du processus de chauffage, le colorant organique modifie ou altère la couche 8 en cours de fusion au niveau de sa surface et forme, sur cette couche 8, l'identification durable souhaitée.

## Revendications

1. Procédé pour apposer une identification ou une inscription sur des pièces de verre qui sont soumises à un traitement thermique au cours de leur fabrication, ceci avant l'exécution de ce traitement thermique, procédé consistant à déposer sur une surface desdites pièces de verre une couche d'émail inorganique à cuire et un marquage à l'aide d'un colorant, **caractérisé en ce que** ledit procédé est destiné à identifier des feuilles de verre (1) avant de les porter à leur température de traitement thermique type bombage ou trempe en vue d'un suivi des vitrages dans un procédé de fabrication comportant plusieurs stades opératoires, ledit procédé comprenant successivement :
- l'application d'une couche continue (5 ; 8) d'un émail à cuire inorganique sur une surface déterminée de la feuille de verre (1), puis son séchage,
- l'application d'un marquage ou inscription (2 ; 9) servant d'identification à l'aide d'un colorant organique à l'emplacement de cette surface déterminée, soit après l'application de la couche continue (5 ; 8) d'émail et son séchage, soit avant l'application de ladite couche,
- la cuisson de la couche d'émail (5 ; 8), la décomposition du colorant organique du fait de cette cuisson altérant la couche d'émail (5 ; 8) et formant de ce fait au niveau de celle-ci l'identification (2 ; 9) recherchée.

2. Procédé suivant la revendication 1, **caractérisé en** **ce que** la cuisson de la couche d'émail à cuire inorganique (5) s'effectue au cours du chauffage nécessaire pour le traitement thermique du vitrage (1).

3. Procédé suivant l'une des revendications 1 ou 2, **caractérisé en ce que** l'application de la couche d'émail à cuire inorganique (5) sur la surface du vitrage (1) s'effectue par un procédé de sérigraphie.

4. Procédé suivant l'une quelconque des revendications 1 à 3, **caractérisé en ce** **qu**'on utilise une composition d'un émail à cuire inorganique qui donne une couche vitrifiée émaillée opaque.

5. Procédé suivant l'une quelconque des revendications 1 à 4, **caractérisé en ce** **que** l'identification ou l'inscription (2) s'effectue à l'aide d'une imprimante à jet d'encre.

6. Application du procédé suivant l'une des revendications 1 à 5, lors de la fabrication de vitrages, notamment de vitrage automobiles, présentant un bord décoratif en forme de cadre, **caractérisée en ce que** l'identification ou l'inscription (2 ; 9) à l'aide du colorant organique est exécutée à un endroit qui est recouvert par la couche d'émail à cuire (5 ; 8) formant ledit bord décoratif, de sorte que l'identification ou l'inscription (2 ; 9) apparaît dans ce bord décoratif.

7. Application du procédé suivant la revendication 6, **caractérisée en ce que** l'identification ou l'inscription (2 ; 9) dans le bord décoratif formé par la couche d'émail à cuire (5 ; 8) est visible soit des deux côtés du vitrage (1) quand le colorant organique a été déposé avant l'application de la couche d'émail à cuire (5 ; 8), soit seulement du côté du vitrage (1) sur lequel la couche d'émail à cuire (5 ; 8) a été appliquée quand le colorant organique a été déposé après application et séchage de ladite couche d'émail à cuire.

8. Vitrage (1), notamment d'automobile, pourvu d'une identification ou d'une inscription (2 ; 9), au niveau du bord décoratif en forme de cadre formé d'un émail à cuire opaque (5 ; 8), identification obtenue conformément au procédé selon l'une des revendications 1 à 5, **caractérisé** **en ce que** l'identification ou l'inscription (2 ; 9) est formée par des lacunes translucides ou des altérations superficielles visibles de l'émail à cuire dans la zone du bord décoratif (5 ; 8).

## Patentansprüche

1. Verfahren zum Anbringen einer Kennzeichnung oder einer Beschriftung auf Werkstücken aus Glas, die im Zuge ihrer Herstellung einer Wärmebehandlung unterworfen werden, vor der Durchführung der Wärmebehandlung, indem auf eine Oberfläche der Werkstücke aus Glas eine Schicht aus einer anorganischen Einbrennfarbe aufgebracht wird und eine Kennzeichnung mit Hilfe einer Farbe erfolgt,
**dadurch gekennzeichnet**, daß das Verfahren zum Kennzeichnen von Glasscheiben (1) vor dem Erwärmen auf ihre Biege-oder Vorspanntemperatur zum Zweck einer Verfolgung der Glasscheiben in einem mehrere Behandlungsstufen umfassenden Herstellverfahren dient und nacheinander folgende Schritte umfaßt:
- Aufbringen einer zusammenhängenden Schicht (5;8) einer anorganischen Einbrennfarbe auf eine bestimmte Fläche der Glasscheibe (1) und anschließendes Trocknen,
- Aufbringen einer Markierung oder Beschriftung (2;9) zur Kennzeichnung mit Hilfe einer organischen Farbe an der Stelle der bestimmten Fläche, und zwar entweder nach dem Aufbringen der zusammenhängenden Schicht (5;8) aus der Einbrennfarbe und dem Trockenvorgang oder vor dem Aufbringen dieser Schicht, sowie
- Einbrennen der Schicht aus Einbrennfarbe (5;8), wobei infolge des Einbrennvorgangs die organische Farbe sich zersetzt und auf diese Weise in der Schicht der Einbrennfarbe die gewünschte Kennzeichnung (2;9) bildet.

2. Verfahren nach Anspruch 1, dadurch gekennzeichnet, daß das Einbrennen der Schicht aus anorganischer Einbrennfarbe (5) im Zuge der für die thermische Behandlung der Glasscheibe (1) erforderlichen Erwärmung erfolgt.

3. Verfahren nach Anspruch 1 oder 2, dadurch gekennzeichnet, daß das Aufbringen der Schicht aus anorganischer Einbrennfarbe (5) auf die Oberfläche der Glasscheibe (1) durch ein Siebdruckverfahren erfolgt.

4. Verfahren nach einem der Ansprüche 1 bis 3, dadurch gekennzeichnet, daß für die anorganische Einbrennfarbe eine Zusammensetzung verwendet wird, die eine opake Emailschicht bildet.

5. Verfahren nach einem der Ansprüche 1 bis 4, dadurch gekennzeichnet, daß die Kennzeichnung oder Beschriftung (2) mit Hilfe eines Tintenstrahldruckers durchgeführt wird.

6. Anwendung des Verfahrens nach einem der Ansprüche 1 bis 5 bei der Herstellung von Glasscheiben, insbesondere von Autoglasscheiben, mit einem rahmenförmigen Dekorrand, dadurch gekennzeichnet, daß die Kennzeichnung oder Beschriftung (2;9) mit Hilfe der organischen Farbe an einer Stelle erfolgt, die von der den Dekorrand bildenden Schicht aus Einbrennfarbe (5;8) bedeckt ist, so daß die Kennzeichnung oder Beschriftung (2;9) in diesem Dekorrand erscheint.

7. Anwendung des Verfahrens nach Anspruch 6, dadurch gekennzeichnet, daß die Kennzeichnung oder Beschriftung (2;9) innerhalb des durch die Schicht aus Einbrennfarbe (5;8) gebildeten Dekorrahmens von beiden Seiten der Glasscheibe (1) sichtbar ist, wenn die organische Farbe vor dem Aufbringen der Schicht aus Einbrennfarbe (5;8) aufgebracht wurde, oder daß sie, falls die organische Farbe nach dem Aufbringen und Trocknen der Schicht aus Einbrennfarbe aufgebracht wurde, nur von derjenigen Seite der Glasscheibe (1) sichtbar ist, auf der die Schicht aus Einbrennfarbe (5;8) aufgebracht wurde.

8. Glasscheibe (1), insbesondere Autoglasscheibe, mit einer Kennzeichnung oder einer Beschriftung (2;9) in dem rahmenförmigen, aus einer opaken Einbrennfarbe (5;8) bestehenden Dekorrand, wobei die Kennzeichnung nach dem Verfahren nach einem der Ansprüche 1 bis 5 erhalten wurde, dadurch gekennzeichnet, daß die Kennzeichnung oder Beschriftung (2;9) von lichtdurchlässigen Durchbrechungen oder sichtbaren Oberflächenveränderungen der Einbrennfarbe im Bereich des Dekorrandes (5;8) gebildet wird.

## Claims

1. Process for placing an identification or an inscription on glass parts, which are subject to a heat treatment during their manufacture, prior to the performance of said heat treatment, said process consisting of depositing on one surface of said glass parts a coating of inorganic enamel to be fired and marking with the aid of a pigment, characterized in that said process is directed at identifying glass sheets (1) before raising them to their heat treatment temperature of the bending or tempering type with a view to following the glazings in a manufacturing process involving several operating stages, said process successively comprising:
- the application of a continuous coating (5,8) of an inorganic enamel to be fired on a given surface of the glass sheet (1), followed by the drying thereof,
- the application of a marking or inscription (2,9) serving as an identification with the aid of an organic pigment at the location of said given surface, either following the application of the continuous enamel coating (5,8) and the drying thereof, or prior to the application of said coating,
- the firing of the enamel coating (5,8), the decomposition of the inorganic pigment as a result of said firing deteriorating the enamel coating (5,8) and consequently forming at said coating the sought identification (2,9).

2. Process according to claim 1, characterized in that the firing of the coating of inorganic enamel to be fired (5) takes place during the heating necessary for the heat treatment of the glazing (1).

3. Process according to either of the claims 1 or 2, characterized in that the application of the coating of inorganic enamel to be fired (5) onto the surface of the glazing (1) takes place by a screen printing process.

4. Process according to any one of the claims 1 to 3, characterized in that use is made of a composition of an inorganic enamel to be fired, which gives an opaque, enamelled, vitrified coating.

5. Process according to any one of the claims 1 to 4, characterized in that the identification or inscription (2) is provided with the aid of an ink jet printer.

6. Application of the process according to any one of the claims 1 to 5, during the manufacture of glazings, particularly car glazings, having a decorative edge in the form of a frame, characterized in that the inscription or identification (2,9) produced with the aid of the organic pigment is made at a location which is covered by the enamel coating to be fired (5,8) forming said decorative edge, so that the identification or inscription (2,9) appears in said decorative edge.

7. Application of the process according to claim 6, characterized in that the identification or inscription (2,9) in the decorative edge formed by the enamel coating to be fired (5,8) is visible either on the two sides of the glazing (1) when the organic pigment has been deposited prior to the application of the enamel coating to be fired (5,8), or only on the side of the glazing (1) to which the enamel coating to be fired (5,8) has been applied when the organic pigment has been deposited following the application and drying of said enamel coating to be fired.

8. Glazing, particularly for a car, provided with an identification or an inscription (2,9) at the decorative edge in frame form formed from an opaque enamel to be fired (5,8), said identification being obtained according to the process of any one of the claims 1 to 5, characterized in that the identification or inscription (2,9) is formed by translucent voids or visible surface deteriorations of the enamel to be fired in the area of the decorative edge (5,8).
